# EUROPÄISCHE PATENTANMELDUNG

(11) **EP 4 636 240 A1**
(43) Veröffentlichungstag der Anmeldung: **22.10.2025**
(21) Anmeldenummer: 25159670.6
(22) Anmeldetag: 24.02.2025
(51) Int. Cl.: F02K 9/97, B64G 1/00, F41F 3/04

(54) **STARTPLATTFORM UND RAKETENTRIEBWERKSDÜSE MIT IN DIE VERBRENNUNGSGASE RAGENDER ZAHNGRUPPE**

(30) Priorität: 17.04.2024 DE 102024110781
(71) Anmelder: ArianeGroup GmbH, 82024 Taufkirchen (DE)
(72) Erfinder: Frey, Manuel, 81549 München (DE); Aichner, Thomas, 83607 Holzkirchen (DE); Stark, Ralf, 74219 Möckmühl (DE); Behr, Roland, 83607 Holzkirchen (DE)
(74) Vertreter: Schornack, Oliver

(57) **Zusammenfassung**

Die vorliegende Offenbarung umfasst eine Startplattform für ein Raketentriebwerk sowie eine Düse (210) für ein Raketentriebwerk mit jeweils einer nach innen ragenden Zahngruppe (110). Die Zahngruppe umfasst eine Mehrzahl von Zähnen, die an einer Austrittskante (212) der Düse (210) des Raketentriebwerks angeordnet sind und in die ausströmenden Verbrennungsgase ragen.

## Beschreibung

Die vorliegende Offenbarung betrifft eine Startplattform für ein Raketentriebwerk sowie eine Düse für ein Raketentriebwerk mit jeweils einer nach innen ragenden Zahngruppe. Insbesondere betrifft die vorliegende Offenbarung eine Startplattform und ein Raketentriebwerk mit einer Mehrzahl von Zähnen, die an einer Austrittskante der Düse des Raketentriebwerks angeordnet sind und in die ausströmenden Verbrennungsgase ragen.

Bei herkömmlichen Raketentriebwerken liegt am Ende der Raketentriebwerksdüse (in Strömungsrichtung der Verbrennungsgase schauend) ein Bereich, in dem sich der Verbrennungsgasstrom bei ausreichendem Umgebungsdruck von einer Innenwand der Düse lösen kann. Insbesondere beim Hochfahren oder Herunterfahren (Drosseln) des Raketentriebwerks kann eine Strahlablösung auftreten, wobei am Ende der Raketentriebwerksdüse Umgebungsluft in die Düse einströmt.

Durch dieses Phänomen kommt es zu einer Belastung der Raketentriebwerksdüse durch Seitenkräfte, weil Ablösung üblicherweise asymmetrisch um den Umfang erfolgt. Eine statische Auslegung der Raketentriebwerksdüse und anderer Triebwerksteile auf diese Seitenkräfte erhöht das Gewicht der Düse und anderer Triebwerkskomponenten, wodurch wiederum eine Nutzlast der von dem Raketentriebwerk angetriebenen Rakete reduziert wird.

Es ist daher eine Aufgabe der vorliegenden Offenbarung, Seitenkräfte, die auf eine Raketentriebwerksdüse einwirken, zu reduzieren.

Diese Aufgabe wird durch die vorliegende Erfindung gelöst, wie sie in den unabhängigen Ansprüchen definiert ist. Bevorzugte Ausführungsformen sind in den abhängigen Ansprüchen definiert.

Gemäß einem ersten Aspekt zum besseren Verständnis der vorliegenden Offenbarung umfasst eine Startplattform für ein Raketentriebwerk einen Grundkörper mit einem Rand, der dazu eingerichtet ist, mit einer Austrittskante einer Düse des Raketentriebwerks zu korrespondieren. Mit anderen Worten weist der Grundkörper einen Rand auf, der der Austrittskante der Düse gegenüberliegend angeordnet sein kann, wenn die Raketentriebwerksdüse auf der Startplattform angeordnet ist. Lediglich beispielhaft kann die Austrittskante der Düse ringförmig sein, wobei der Rand des Grundkörpers der Startplattform ebenfalls ringförmig ist oder einen ringförmigen Abschnitt aufweist. Um die Verbrennungsgase beim Starten des Raketentriebwerks aus der Düse ausströmen zu lassen, kann der Grundkörper hohl sein. Dabei bildet der Rand des Grundkörpers einen Innenrand zu dem Hohlraum, durch den die Verbrennungsgase strömen können, und die Zähne ragen von dem Innenrand vor.

Ferner umfasst die Startplattform eine Zahngruppe, die an dem Rand des Grundkörpers angeordnet ist. Die Zahngruppe umfasst eine Mehrzahl von Zähnen, die von dem Rand in das Innere des Grundkörpers ragen. Mit anderen Worten sind die Zähne nebeneinander am (Innen-) Umfang des Grundkörpers (bzw. des Randes) angeordnet, sodass die Zähne in die Strömung der Verbrennungsgase des (gestarteten) Raketentriebwerks ragen.

Die am Rand angeordneten Zähne führen zu einer Störung der Umströmung der Düsenaustrittskante. Dabei kann es sich um Umgebungsluft handeln, die um die Austrittskante herum in das Innere der Düse strömt, aber auch um Verbrennungsgase, die um die Austrittskante herum nach außen strömen. Die Zähne verhindern oder zumindest reduzieren eine großräumige Ausbildung von Strömungsstrukturen in der Nähe der Düsenwand durch das Bilden kleiner lokaler Strukturen.

Insgesamt wird durch die Zähne eine Verbesserung der Symmetrieeigenschaften der Strömung und eine Homogenisierung des gesamten Strömungsfeldes erreicht. Dadurch werden Seitenlasten auf die Düsenstruktur reduziert.

Zudem ermöglicht das Anbringen der Zahngruppe an der Startplattform eine Gewichtsersparnis für das Raketentriebwerk, da sie andernfalls während des gesamten Betriebs des Raketentriebwerks mitgeführt werden müsste. Ferner müssten die Zähne, wenn sie an der Raketentriebwerksdüse angeordnet wären, für die dauerhafte thermische Belastung ausgelegt sein, wodurch sie ebenfalls schwerer wären. Auch können die in den Verbrennungsgasstrom ragenden Zähne im Normalbetrieb des Raketentriebwerks Leistungseinbußen mit sich bringen. Die Anordnung an der Startplattform vermeidet diese Nachteile.

In einer Implementierungsvariante kann sich jeder der Zähne der Zahngruppe von dem Rand des Grundkörpers in einem Winkel zu einer von dem Rand gebildeten Ebene erstrecken. Mit anderen Worten liegen die Zähne nicht in der gleichen Ebene wie der Rand des Grundkörpers. Insbesondere kann der Winkel zu der von dem Rand gebildeten Ebene so gewählt sein, dass die jeweilige Spitze der Zähne stromabwärts des Verbrennungsgasstromes zeigt, also nicht in das Düseninnere hinein. Die Ebene des Randes des Grundkörpers kann auch mit einer Querschnittsebene der Düse ersetzt werden.

In einer Implementierungsvariante kann der Winkel zwischen Zahn und von dem Rand gebildeter Ebene zwischen 90° und 120° betragen. Lediglich als Beispiel kann dieser Winkel 100° betragen.

In einer Implementierungsvariante kann sich jeder der Zähne der Zahngruppe von einer Tangente an einer Kontur der Düse an der Austrittskante in einem Winkel erstrecken. Mit anderen Worten bildet die Längsachse jedes Zahns einen Winkel mit der Tangente an der Austrittskante. Auch hier kann der Winkel so gewählt sein, dass die jeweilige Spitze der Zähne stromabwärts des Verbrennungsgasstromes zeigt.

In einer Implementierungsvariante kann der Winkel zwischen (der Längsachse von) dem Zahn und der Tangente zwischen 10° bis 30°, bevorzugt 20°, betragen.

Bei jeder der Implementierungsvarianten mit einem Winkel bewirkt jeder Zahn eine Störung der Umströmung der Austrittskante der Düse, beeinflusst aber in nur geringerem Maße die Strömung der Verbrennungsgase.

In einer Implementierungsvariante kann jeder der Zähne der Zahngruppe die Form eines Dreiecks, eines Rechtecks, eines Trapezes, eines Teils einer Ellipse oder eines Teils eines Kreises aufweisen. Jede dieser Formen ermöglicht eine Beeinflussung der Strömung im Bereich der Austrittskante der Düse. Insbesondere wird in Umfangsrichtung der Austrittskante der Düse durch die Zahngruppe eine Struktur bereitgestellt, die die oben genannten Vorteile durch Strömungsbeeinflussung in diesem Bereich erzielt. Bei dem Teil einer Ellipse oder eines Kreises kann es sich um eine halbe Ellipse bzw. einen halben Kreis handeln. Selbstverständlich können auch andere Abschnitte/Teile einer Ellipse bzw. eines Kreises gewählt werden, um die Zähne zu formen.

In einer Implementierungsvariante können die Schenkel des Dreiecks oder die Seitenkanten des Trapezes einen Winkel zwischen 50° und 90°, vorzugsweise zwischen 65° und 85°, und besonders bevorzugt von 75° gegenüber einer Querachse des Zahns aufweisen. Beide Formen weisen eine zulaufende Spitze auf, wie sie auch bei einem Teil einer Ellipse oder eines Kreises vorhanden ist.

In einer Implementierungsvariante kann jeder der Zähne eine Länge aufweisen, die ein Verhältnis zu einer Breite an der Zahnbasis von 0,3 bis 20, bevorzugt von 2 bis 6, aufweist. Die Länge der Zähne, und somit auch die Eindringtiefe der Zähne in den Strahl der Verbrennungsgase des Raketentriebwerks, kann auch abhängig von der thermischen Belastung festgelegt werden. Beispielsweise kann sie abhängig von dem für die Zähne verwendeten Material und/oder abhängig von der Temperatur der Verbrennungsgase zu bestimmten Betriebszeiten/-phasen gewählt werden.

In einer Implementierungsvariante kann die Zahngruppe aus einem ablativen Material gebildet sein, das sich durch die Verbrennungsgase auflöst. Dadurch bewirkt die Zahngruppe zum Beispiel während des Starts/Hochfahrens des Raketentriebwerks die oben beschriebene Strömungsverbesserung im Bereich der Austrittskante, also in einer Phase des Betriebs des Raketentriebwerks, in der asymmetrische Strömungen und andere Faktoren zu einer erhöhten Belastung durch Seitenkräfte führen. Mit zunehmender Betriebsdauer und damit auch einhergehender Erhöhung der Temperatur der Verbrennungsgase wird das ablative Material der Zahngruppe aufgelöst. Lediglich beispielhaft kann das ablativen Material verdampfen.

In einer Implementierungsvariante kann eine Basis jedes der Zähne eine Breite aufweisen, die abhängig von der Anzahl der Zähne in der Zahngruppe und dem Umfang des Grundkörpers an dem Rand ist, wobei zwischen 10 und 400 Zähnen, bevorzugt zwischen 70 und 110 Zähnen, und besonders bevorzugt 90 Zähne, in der Zahngruppe enthalten sind.

In einer Implementierungsvariante kann ein Abstand zweier benachbarter Zähne an deren Basis abhängig von einer Breite einer Basis der Zähne sein, wobei vorzugsweise ein Verhältnis zwischen Abstand zweier benachbarter Zähne und der Breite der Basis eines Zahns zwischen 0,2 und 10, bevorzugt zwischen 0,5 bis 2, beträgt. Ein Abstand zwischen zwei benachbarten Zähnen ermöglicht eine teilweise Umströmung der Austrittskante der Düse, wodurch symmetrische Strömungen (in Umfangs- und Radialrichtung betrachtet) erzeugt werden können. Dadurch werden die Seitenlasten auf die Düse reduziert. Ferner können gegenläufig rotierende Wirbelpaare in der Strömung der Verbrennungsgase gebildet werden, die eine Stabilisierung der Strömungsverhältnisse begünstigen.

Gemäß einem zweiten Aspekt zum besseren Verständnis der vorliegenden Offenbarung umfasst eine Düse eines Raketentriebwerks einen Grundkörper mit einer Austrittskante, wobei der Grundkörper dazu eingerichtet ist, Verbrennungsgase zu führen, die an der Austrittskante die Düse verlassen.

Ferner umfasst die Raketentriebwerksdüse eine Zahngruppe, die an der Austrittskante angeordnet ist. Die Zahngruppe umfasst eine Mehrzahl von Zähnen, die von der Austrittskante nach innen ragen. Insbesondere können die Zähne in Umfangsrichtung angeordnet sein und in Radial- und Längsrichtung der Düse zeigen.

Ferner ist die Zahngruppe aus einem ablativen Material gebildet, das sich durch die Verbrennungsgase auflöst. Dadurch bewirkt die Zahngruppe zum Beispiel während des Starts/Hochfahrens des Raketentriebwerks die oben beschriebene Strömungsverbesserung im Bereich der Austrittskante, also in einer Phase des Betriebs des Raketentriebwerks, in der asymmetrische Strömungen und andere Faktoren zu einer erhöhten Belastung durch Seitenkräfte führen. Mit zunehmender Betriebsdauer und damit auch einhergehende Erhöhung der Temperatur der Verbrennungsgase wird das ablative Material der Zahngruppe aufgelöst. Lediglich beispielhaft kann das ablative Material verdampfen.

Somit ist die Zahngruppe im Normalbetrieb des Raketentriebwerks aufgelöst, wodurch die Zähne der Zahngruppe die Strömung der Verbrennungsgase nicht mehr beeinflussen und das Gewicht des Raketentriebwerks auch nicht mehr durch die Zahngruppe erhöht ist.

Die vorliegende Offenbarung ist nicht auf die Aspekte und Implementierungsvarianten in der beschriebenen Form und Reihenfolge beschränkt. Insbesondere soll die Beschreibung der Aspekte und Varianten nicht als dahingehend einschränkend verstanden werden, dass die vorliegende Offenbarung auf bestimmte Merkmalsgruppen beschränkt ist. Kombinationen der Aspekte und Varianten fallen somit ebenso unter die vorliegende Offenbarung. Mit anderen Worten kann jede Variante oder optionales Merkmal mit einem anderen Aspekt, einer anderen Variante, einem optionalen Merkmal oder bereits Kombinationen davon kombiniert werden.

Nachfolgend wird die vorliegende Offenbarung anhand von exemplarischen Ausgestaltungen beschrieben, die in den Figuren dargestellt sind, wobei.
- Figur 1: schematisch eine Startplattform und einen Teil eines darauf angeordneten Raketentriebwerks zeigt;
- Figur 2: schematisch Details der Startplattform und des Raketentriebwerks aus Figur 1 zeigt;
- Figur 3: schematisch eine Zahngruppe zeigt;
- Figur 4: schematisch einen Ausschnitt einer beispielhaften Zahngruppe zeigt;
- Figur 5: schematisch einen Längsschnitt einer Düse und Startplattform und Strömungsverhältnisse im Bereich einer Zahngruppe zeigt; und
- Figur 6: schematisch einen theoretischen Strömungsverlauf im Bereich einer Zahngruppe zeigt.

In der nachfolgenden Beschreibung werden bestimmte Details zum allgemeinen Verständnis der vorliegenden Offenbarung anhand der Figuren beschrieben, wobei die vorliegende Offenbarung nicht auf diese bestimmten Details beschränkt ist.

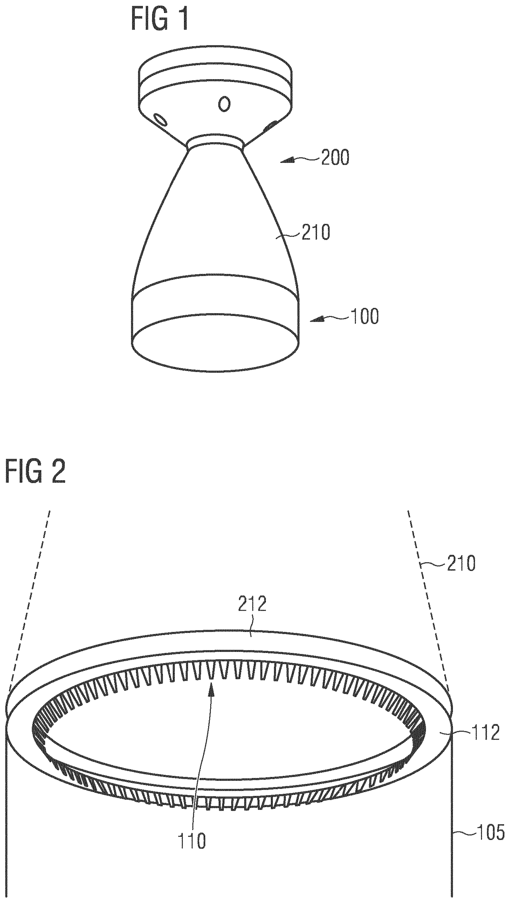

Figur 1 zeigt schematisch eine Startplattform 100 für ein Raketentriebwerk 200, welches in Figur 1 mit einer konvergent-divergenten Düse 210 (z.B. einer Glockendüse) und einem Teil eines Triebwerkmotors am oberen Ende dargestellt ist. Die Startplattform 100 ist lediglich beispielhaft als zylindrisches Bauteil dargestellt. Selbstverständlich kann die Startplattform 100 jede beliebige Form einnehmen. Im Inneren ist die Startplattform 100 vorzugsweise hohl, sodass aus der Düse 210 austretende Verbrennungsgase (in Figur 1 nach unten) entweichen können. Hierbei kann die Startplattform 100 auch eine sehr geringe Höhe aufweisen, beispielsweise kann die Startplattform 100 lediglich ringförmig am unteren Ende der Düse 210 vorgesehen sein.

Figur 2 zeigt schematisch Details der Startplattform 100 und des Raketentriebwerks 200. Insbesondere weist die Startplattform 100 einen Grundkörper 105 mit einem Rand 112 auf, der dazu eingerichtet ist, mit einer Austrittskante 212 der Düse 210 des Raketentriebwerks 200 zu korrespondieren. Lediglich beispielhaft ist in Figur 2 der Rand 112 so dargestellt, dass er einen gleichen (oder zumindest ähnlichen) Außendurchmesser und Innendurchmesser wie die Austrittskante 212 der Düse 210 hat. Die äußere Gestalt des Grundkörpers 105 bzw. des Randes 112 kann frei gewählt werden. Der Innendurchmesser des Randes 112 sollte für einen optimalen Strömungsverlauf mit dem Innendurchmesser der Austrittskante 212 der Düse 210 korrespondieren bzw. diesem entsprechen. Die Startplattform 100 weist ferner eine Zahngruppe 110 auf, die an dem Rand 112 des Grundkörpers 105 angeordnet ist.

Die Zahngruppe 110 ist lediglich beispielhaft als ringförmiges Bauteil dargestellt. Selbstverständlich kann die Zahngruppe 110 auch eine andere Form einnehmen, wie zum Beispiel eine Ellipse oder auch ein Polygon. Auf jeden Fall entspricht die Form der Zahngruppe 110 dem Querschnitt der Düse 210 an der Austrittskante 212, sodass beide korrespondieren und überlappend angeordnet werden können.

Auch die Form der Düse 210 und des Grundkörpers 105 in Längsrichtung (vertikal in den Figuren 1 und 2) sind lediglich beispielhaft als konvergent-divergenten (Düse 210) und zylindrisch (Grundkörper 105) gezeigt. Auch hier kann jede beliebige Form gewählt werden. Da die Verbrennungsgase nach dem Verlassen der Düse 210 abgeführt werden müssen, kann der Grundkörper 105 auch eine sehr geringe Bauhöhe aufweisen. Zum Beispiel kann der Grundkörper 105 eine Bauhöhe aufweisen, die der Materialstärke der Zahngruppe 110 entspricht. Mit anderen Worten wird der Grundkörper 105 durch den Rand 112 gebildet und die vertikale Ausdehnung in Figur 2 ist als optional anzusehen.

Dabei ist auch eine Ausführungsform möglich, in der die Zahngruppe 110 direkt an der Austrittskante 212 der Düse 210 angebracht ist. In diesem Fall ist die Zahngruppe 110 zumindest teilweise aus einem ablativen Material gefertigt, um sich während des Hochfahrens des Triebwerks 200 aufzulösen.

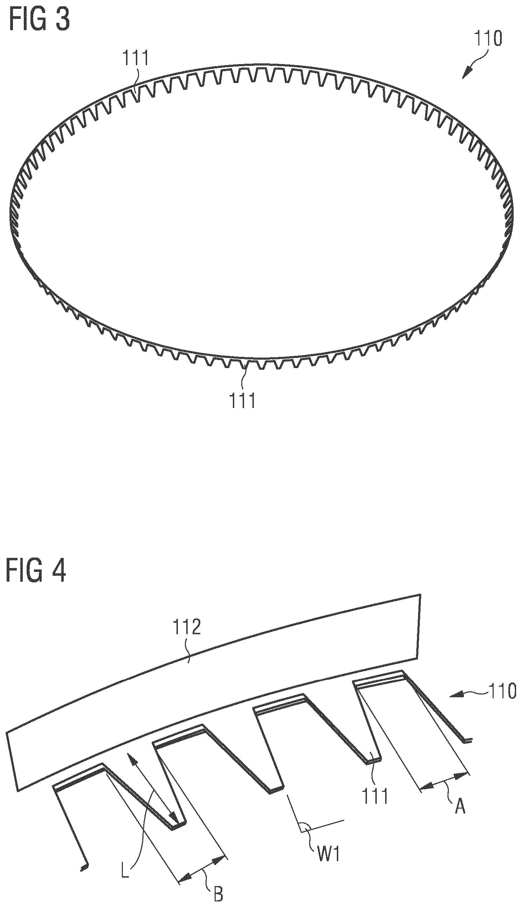

Figur 3 zeigt schematisch eine beispielhafte Zahngruppe 110. Die Zahngruppe 110 umfasst eine Mehrzahl von Zähnen 111, die von dem Rand 112 (in Figur 3 nicht dargestellt) in das Innere des Grundkörpers 105 ragen. Mit anderen Worten stehen die Zähne 111 in einem Raum, durch den Verbrennungsgase beim Verlassen der Düse 210 strömen. Dadurch wird der Strom der Verbrennungsgase im Bereich der Austrittskante 212 beeinflusst, wie dies in Bezug auf die Figuren 4 bis 6 noch näher erläutert wird.

Da die Zahngruppe 110 Teil der Startplattform 100 ist, wirken die Zähne 111 nur in der Startphase des Raketentriebwerks 200 auf die Strömung der Verbrennungsgase einerseits und um die Austrittskante 212 herum einströmende Umgebungsluft andererseits ein. Sobald sich das Raketentriebwerk 200 von der Startplattform 100 entfernt (zum Beispiel beim Abheben einer zugehörigen Rakete, oder durch Absenken der Startplattform 100) ist der durch die Zahngruppe 110 erzielte Effekt nicht mehr vorhanden. Da die größte Verbesserung der Strömung der Verbrennungsgase beim Start des Raketentriebwerks erzielt werden kann, kann durch den Verbleib der Zahngruppe 110 an der Startplattform 100 der Betrieb des Raketentriebwerks 200 verbessert werden, ohne dass das Triebwerk 200 oder die Düse 210 selbst verändert werden müssen.

Alternativ oder zusätzlich kann die Zahngruppe 110 oder zumindest die Zähne 111 aus einem ablativen Material hergestellt werden. Dadurch können sich beim Starten des Raketentriebwerks 200 die Zähne 111 mit zunehmender Temperatur der Verbrennungsgase und Dauer der Umströmung mit Verbrennungsgasen auflösen, zum Beispiel verdampfen. Dies ermöglicht eine Reduzierung der Beeinflussung der Strömung der Verbrennungsgase durch die Zahngruppe 110 mit zunehmender Temperatur und auch Geschwindigkeit der Verbrennungsgase. Beim Erreichen des Normalbetriebs des Raketentriebwerks 200 ist die Zahngruppe 110 nicht mehr notwendig.

Aufgrund des ablativen Materials kann die Zahngruppe 110 auch direkt an der Düse 210 angebracht werden, sodass es keiner gesonderten Startplattform 100 bedarf. Insbesondere kann die Zahngruppe 110, wie in Figur 2 angedeutet, an der Unterseite der Austrittskante 212 angeordnet sein und mit der Düse 210 verbunden sein, anstatt eine Startplattform 100 zu installieren.

Figur 4 zeigt schematisch einen Ausschnitt einer beispielhaften Zahngruppe 110. Insbesondere weisen die dargestellten Zähne 111 die Form eines Trapezes auf, welches an der Basis (dem Rand 112 zugewandt) eine Breite B und eine Länge L (von dem Rand 112 bis zur Spitze des Trapezes am innersten Punkt der Zahngruppe 110) aufweist. Lediglich beispielhaft liegen der Zeichnung 90 Zähne zugrunde, wobei die Zahnfußbreite B genauso breit ist wie der Abstand A zwischen zwei benachbarten Zähnen, und wobei ein Längen- zu Zahnfußbreitenverhältnis L/B von 3.7 verwendet wurde.

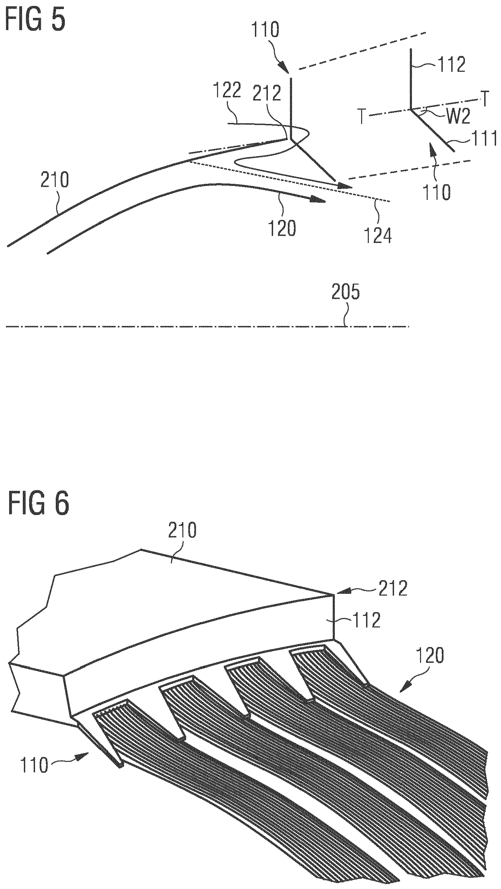

Die Seitenkanten des Trapezes weisen einen Winkel W1 zwischen 50° und 90°, vorzugsweise zwischen 65° und 85°, und besonders bevorzugt von 75° gegenüber einer Querachse des Zahns 111 auf. Die Querachse des Zahns 111 kann vereinfacht als Tangente zu dem Rand 112 betrachtet werden und ist rechtwinklig zu einer Längsachse des Zahns 111 angeordnet. Die Längsachse kann parallel zu einer Längsachse 205 der Düse (siehe Figur 5) verlaufen.

Anstatt eines Trapezes können die Zähne 111 auch die Form eines Dreiecks, eines Rechtecks, eines Teils einer Ellipse oder eines Teils eines Kreises aufweisen.

Für den Fall, dass die Form der Zähne 111 ein Dreieck ist, können die Schenkel des Dreiecks ebenfalls den oben genannten Winkel W1 einnehmen.

Zwischen zwei benachbarten Zähnen 111 kann ein Abstand A vorgesehen sein. Beispielsweise kann der Abstand zweier benachbarter Zähne 111 an deren Basis abhängig von der Breite B der Basis der Zähne sein, wobei vorzugsweise ein Verhältnis zwischen Abstand A zweier benachbarter Zähne und der Breite B der Basis eines Zahns zwischen 0,2 und 10, bevorzugt zwischen 0,5 bis 2, beträgt. Aufgrund des Abstands zwischen den Zähnen 111 können Bereiche gebildet werden, in denen die Strömung der Verbrennungsgase nicht beeinflusst wird, wodurch die symmetrische Ausbildung von Strömungen, wie zum Beispiel gegenläufig rotierende Wirbelpaare, begünstigt wird.

Figur 5 zeigt schematisch Strömungsverhältnisse im Bereich einer Zahngruppe 110, sowie (rechts oben in Figur 5) die Zahngruppe 110 im Detail. Figur 5 zeigt ferner schematisch einen Längsschnitt durch die Düse 210 des Raketentriebwerks 200, die eine Längsachse 205 aufweist. Die Strömung der Verbrennungsgase verläuft hauptsächlich entlang oder zumindest in Hauptrichtung der Längsachse 205. Ferner bilden sich Strömungen 120 (bzw. Stromlinien) entlang der Innenwand der Düse 210. Die wandnahe Strömung 120 am Austrittsquerschnitt der Düse 210 weist einen starken Gradienten der Strömungsgeschwindigkeit auf, d. h. der Bereich der klassischen Grenzschicht ist in der beschleunigten Strömung sehr klein. Lediglich beispielhaft können in direkter Nähe der Wand Geschwindigkeiten in der Größenordnung über 1000 m/s erreicht werden.

Dabei kommt es - insbesondere beim Hochfahren oder Herunterfahren des Triebwerks - zu einer Ablösung der Strömung 120 in Wandnähe, insbesondere solange der nominale Brennkammerdruck noch nicht erreicht ist. Umgebungsluft kann um die Austrittskante 212 der Düse 210 herumströmen und in das Innere der Düse 210 gelangen, wie dies durch die Strömungslinie 122 schematisch gezeigt ist. Zum einen bilden die beiden Strömungen 120, 122 eine Scherschicht, deren Grenzstromlinie 124 in Figur 5 dargestellt ist. Der große Wanddruckgradient an der Ablöselinie (Fußpunkt der Grenzstromlinie 124 auf der Düse 210) zusammen mit einer üblicherweise auftretenden Asymmetrie dieser Ablöselinie führen zu einer asymmetrischen Wanddruckverteilung, die eine Seitenlast für die Düse 210 darstellen (die Seitenlast wirkt insbesondere in Radialrichtung der Düse 210).

Durch die dichte und/oder abwechselnde Anordnung der Zähne 111 wird die Ausbildung großräumiger Strömungsstrukturen in der Nähe der Austrittskante 212 gestört, in dem lokale, kleinräumige Strömungsstrukturen entsprechend der Größe der angebrachten kleinen Störflächen (Zähne 111) geschaffen werden. Dadurch wird die Symmetrie und Homogenisierung des gesamten beteiligten Strömungsfelds verbessert, und die Seitenlasten auf die Düse 210 reduziert.

Jeder der Zähne 111 der Zahngruppe 110 kann sich von dem Rand 112 des Grundkörpers 105 in einem Winkel zu einer von dem Rand 112 gebildeten Ebene erstrecken. Insbesondere kann jeder der Zähne 111 der Zahngruppe 110 sich von einer Tangente T an einer Kontur der Düse 210 an der Austrittskante 212 in einem Winkel W2 erstrecken, wobei der Winkel W2 vorzugsweise zwischen 10° und 30°, und besonders bevorzugt 20° beträgt. Dadurch ragt jeder der Zähne 111, wie in den Figuren 4 und 6 dargestellt, in die Strömung 120 der Verbrennungsgase und bewirkt die oben beschriebene Symmetriewirkung.

Figur 6 zeigt schematisch einen theoretischen Strömungsverlauf im Bereich einer Zahngruppe 110. Durch das Hineinragen der Zähne 111 in die Strömung 120 und die zwischen den Zähnen 111 vorhandenen Zwischenräume (Abstände zwischen den Zähnen 111 in Umfangsrichtung) wird eine starke Längsausrichtung der Strömung 120 erzielt. Die hohe kinetische Energie der Strömung 120 kann verwendet werden, um sie in Längswirbel umzusetzen. Beispielsweise kann an den Seitenkanten der Zähne 111 ein gegenläufig rotierendes Wirbelpaar gebildet werden, wodurch die geradlinige Strömung 120 verbessert wird. Der in Figur 6 gezeigte Strömungsverlauf ist als rein theoretische Darstellung zu verstehen. Die gezeigte Strömung entspricht tendenziell einem Vollbetrieb der Düse 210 ohne Ablösung und Einströmen von Umgebungsluft wie in Figur 5. In diesem Zustand würde sich das Triebwerk und somit die Düse 210 schon von der Startplattform 100 gelöst haben. Sie dient daher eher dem Verständnis der Anordnung der Zahngruppe 110 im Verhältnis zur Strömung 120.

## Patentansprüche

1. Startplattform (100) für ein Raketentriebwerk (200), umfassend:
einen Grundkörper (105) mit einem Rand (112), der dazu eingerichtet ist, mit einer Austrittskante (212) einer Düse (210) des Raketentriebwerks (200) zu korrespondieren; und
eine Zahngruppe (110), die an dem Rand (112) des Grundkörpers (105) angeordnet ist,
wobei die Zahngruppe (110) eine Mehrzahl von Zähnen (111) umfasst, die von dem Rand (112) in das Innere des Grundkörpers (105) ragen.

2. Startplattform (100) gemäß Anspruch 1, wobei sich jeder der Zähne (111) der Zahngruppe (110) von dem Rand (112) des Grundkörpers (105) in einem Winkel zu einer von dem Rand (112) gebildeten Ebene erstreckt,
wobei sich vorzugsweise jeder der Zähne (111) der Zahngruppe (110) von einer Tangente (T) an einer Kontur der Düse (210) an der Austrittskante (212) in einem Winkel (W2) zwischen 10° und 30°, und besonders bevorzugt von 20°, erstreckt.

3. Startplattform (100) gemäß Anspruch 1 oder 2, wobei jeder der Zähne (111) der Zahngruppe (110) die Form eines Dreiecks, eines Rechtecks, eines Trapezes, eines Teils einer Ellipse oder eines Teils eines Kreises aufweist.

4. Startplattform (100) gemäß Anspruch 3, wobei die Schenkel des Dreiecks oder die Seitenkanten des Trapezes einen Winkel (W1) zwischen 50° und 90°, vorzugsweise zwischen 65° und 85°, und besonders bevorzugt von 75° gegenüber einer Querachse des Zahns (111) aufweisen.

5. Startplattform (100) gemäß einem der Ansprüche 1 bis 4, wobei jeder der Zähne (111) eine Länge (L) aufweist, die ein Verhältnis zu einer Breite (B) an der Zahnbasis von 0,3 bis 20, bevorzugt von 2 bis 6, aufweist, und/oder
wobei eine Basis jedes der Zähne (111) eine Breite (B) aufweist, die abhängig von der Anzahl der Zähne (111) in der Zahngruppe (110) und dem Umfang des Grundkörpers (105) an dem Rand (112) ist, wobei zwischen 10 und 400 Zähnen, bevorzugt zwischen 70 und 110 Zähnen, und besonders bevorzugt 90 Zähne, in der Zahngruppe (110) enthalten sind, und/oder
wobei ein Abstand (A) zweier benachbarter Zähne (111) an deren Basis abhängig von einer Breite (B) einer Basis der Zähne (111) sein, wobei vorzugsweise ein Verhältnis zwischen Abstand (A) zweier benachbarter Zähne (111) und der Breite (B) der Basis eines Zahns (111) zwischen 0,2 und 10, bevorzugt zwischen 0,5 bis 2, beträgt.

6. Startplattform (100) gemäß einem der Ansprüche 1 bis 5, wobei die Zahngruppe (110) aus einem ablativen Material besteht.

7. Düse (210) eines Raketentriebwerks (200), umfassend:
einen Grundkörper (210) mit einer Austrittskante (212), wobei der Grundkörper (210) dazu eingerichtet ist, Verbrennungsgase zu führen, die an der Austrittskante (212) die Düse (210) verlassen;
eine Zahngruppe (110), die an der Austrittskante (212) angeordnet ist,
wobei die Zahngruppe (110) eine Mehrzahl von Zähnen (111) umfasst, die von der Austrittskante (212) nach innen ragen, und
wobei die Zahngruppe (110) aus einem ablativen Material gebildet ist, das sich durch die Verbrennungsgase auflöst.
